# EUROPEAN PATENT APPLICATION

(11) **EP 2 031 241 A1**
(43) Date of publication of application: **04.03.2009**
(21) Application number: 07388060.1
(22) Date of filing: 29.08.2007
(51) Int. Cl.: F03D 1/06, F03D 7/02, F03D 11/00

(54) **Blade for a rotor of a wind turbine provided with barrier generating means**

(71) Applicant: LM GLASFIBER A/S, 6640 Lunderskov (DK)
(72) Inventor: Bove, Stefano, 6640 Lunderskov (DK); Fuglsang, Peter, 7100 Vejle (DK)
(74) Representative: Jensen, Peter Kim

(57) **Abstract**

A blade (10) for a rotor of a wind turbine (2) has a substantially horizontal rotor shaft, the rotor comprising a hub (8), from which the blade (10) extends substantially in a radial direction when mounted to the hub (8). The blade comprises a profiled contour including a leading edge (18) and a trailing edge (20) as well as a pressure side and a suction side, the profiled contour when being impacted by an incident airflow generating a lift. The profiled contour is divided into a root region (30) with a substantially circular profile closest to the hub, an airfoil region (34) with a lift generating profile furthest away from the hub, and a transition region (32) between the root region (30) and the airfoil region (34). The profile of the transition region (32) gradually changes in the radial direction from the circular profile of the root region to the lift generating profile of the airfoil region. The suction side comprises at least a first zone (40, 42), which extends substantially in the direction of the incident airflow, and which is positioned in a zone of a cross-flow. The first zone (40, 42) comprises a first barrier generating means (x06) adapted to generating a barrier of airflow, which extends essentially in the direction of the incident airflow, the barrier of airflow being of sufficient strength and length so as to effectively reduce the cross-flow.

## Description

The present invention relates to a blade for a rotor of a wind turbine having a substantially horizontal rotor shaft, said rotor comprising a hub, from which the blade extends substantially in a radial direction when mounted to the hub, the blade comprising: a profiled contour including a leading edge and a trailing edge as well as a pressure side and a suction side, the profiled contour when being impacted by an incident airflow generating a lift, wherein the profiled contour is divided into: a root region with a substantially circular profile closest to the hub, an airfoil region with a lift generating profile furthest away from the hub, and a transition region between the root region and the airfoil region, the profile of the transition region gradually changing in the radial direction from the circular profile of the root region to the lift generating profile of the airfoil region, and wherein the suction side comprises at least a first zone, which extends substantially in the direction of the incident airflow, and which is positioned in a zone of a cross-flow.

Horizontal axis wind turbines comprise a rotor provided with a number of blades - often two or three - which extend radially from a hub. The blades have a profile transversely to the longitudinal or radial direction of the blade. The blade comprises a root region with a substantially circular profile closest to the hub, an airfoil region with a lift generating profile furthest away from the hub, and a transition region between the root region and the airfoil region, the profile of the transition region gradually changing in the radial direction from the circular profile of the root region to the lift generating profile of the airfoil region. The lift generating profile is provided with a suction side and a pressure side as well as a leading edge and a trailing edge, so that the blade during normal use, i.e. wind-powered rotation of the rotor, is impacted by an incident airflow flowing from the leading edge towards the trailing edge, thereby generating a reduced pressure at the suction side (at a leeward side) relative to the pressure side (at a windward side) so that a pressure differential is created between the suction side and the pressure side, thus generating a lift.

Ideally, the airflow remains attached to the surface of the blade over the entire longitudinal length of the blade. However, in practice the airflows may detach at the suction side of the blade, which may cause increased drag, reduced lift, and thereby lead to a decrease in energy production. This airflow detachment usually occurs in the transverse direction between a position of maximum thickness and the trailing edge of the profile and typically occurs at the root region or transition region, where the profile is non-ideal and has the largest relative blade thickness.

The flow detachment may entail substantially stagnant vortices of airflow, which due to the rotational forces of the rotor may propagate towards the tip end of the blade. These cross-flows of detached airflow can seriously impair the functionality of the blade by reducing the lift over a larger longitudinal extent of the blade.

The purpose of the invention is to provide a blade for a rotor of a wind turbine blade with improved aerodynamic properties.

According to the invention, this is obtained by the first zone comprising a first barrier generating means adapted to generating a barrier of airflow, which extends essentially in the direction of the incident airflow, the barrier of airflow being of sufficient strength and length so as to effectively reduce the cross-flow. Cross-flows arising in a region of detached airflow, for instance due to pressure differentials caused by different incident airflow speeds at different blade radii, and which especially arise in the area of the blade root, can thereby be reduced or prevented by the barrier of airflow preventing the cross-flows from passing the first zone. Thereby, it is possible to prevent a detached flow from propagating in the longitudinal or radial direction of the blade towards the blade tip.

According to a preferred embodiment, the barrier generating means is adapted to generate a barrier of airflow extending at least from an area of maximum relative profile thickness and the trailing edge of the blade. I.e. the barrier extends at least from an area corresponding to the position of maximum thickness (or equivalently the position of the maximum thickness-to-chord ratio) of an airfoil profile to the trailing edge. Thereby, the barrier generating means effectively prevents cross-flows running on the suction side of the blade through this region of the profile, where separation usually occurs and which - partly due to the centrifugal force - can propagate toward the blade tip.

According to another embodiment, the barrier generating means is adapted to generate a barrier of airflow extending substantially from the leading edge to the trailing edge of the blade.

According to yet another embodiment, the blade comprises an additional zone, which extends substantially in the direction of the incident airflow, and which is arranged in a zone of an additional cross-flow, the additional zone comprising a second barrier generating means adapted to generate a second barrier of airflow in the direction of the incident flow within the additional zone. Preferably, the additional zone is arranged in a zone of an additional cross-flow, which is generated in a radius beyond the first zone, i.e. further from the hub. The blade may of course also have a third zone with a third barrier generating means.

In a first embodiment according to the invention, the first barrier generating means and/or the second barrier generating means comprise a number of turbulence generating means, such as a number of vortex generators. Thus, a barrier of coherent turbulent structures, i.e. vortices propagating at the surface of the blade towards the trailing edge, can be generated in the first zone and/or the additional zone by the use of passive flow control devices, the barrier preventing the cross-flow from propagating beyond the respective zones. Preferably, the number of turbulence generating means is adapted to provide vortices with a size, such as a height, corresponding to the size, such as the height, of the cross-flow. That is, the height of the vortices should be at least as large as the height of the cross-flow or the height of the separation from the separated flow, in order to prevent the cross-flow from crossing the first zone. According to another embodiment, the height of the generated vortices is substantially identical to the height of a boundary layer of the airflow across the blade.

Therefore, the size and/or shape of the turbulence generating means or vortex generators should be chosen in order to provide a turbulent flow with a height, which functions as a barrier in order to efficiently prevent the cross-flow. It must be noted here that the vortex generators typically generate vortices, which grow in height towards the trailing edge of the blade.

In another embodiment according to the invention, the first barrier generating means and/or the second barrier generating means comprise a number of boundary layer control means. Thus, the boundary layer control means can create a belt of attached flow, which acts as a barrier to a separated cross-flow by "catching" the cross-flow.

In yet another embodiment according to the invention, the boundary layer control means comprises a number of ventilation holes for blowing, such as air jets or blowing jets, or suction between an interior of the blade and an exterior of the blade. Thereby, a particularly simple solution for creating the belt of attached flow is provided. The air vented from the ventilation holes are used to energise and re-energise the boundary layer in order to maintain the flow attached to the exterior surface of the blade.

The ventilation holes may be arranged substantially tangentially to the contour of the blade. This can be achieved by the blade having a contour with a thickness that has a number of stepwise reductions towards the trailing edge of the blade. The holes can also be oriented with an angle compared to the contour of the blade. However, the holes should not be oriented normally to the contour, since this would generate a new separated flow, which can propagate towards the tip end of the blade. Therefore, the holes are preferably oriented with a gradient towards the trailing edge of the blade in order to ensure that the vented air propagates substantially towards the trailing edge instead of towards the tip end of the blade.

According to another embodiment, the first barrier generating means and/or the second barrier generating means comprise a slat arranged at the leading edge of the blade. The slat usually points downwards, i.e. towards the pressure side of the blade, and is utilised to create a local change in the inflow angle and airfoil lift, thereby causing the flow to remain attached to the surface of the blade. This attached "tunnel" for the flow creates a barrier where the cross-flow is caught and thus forced to join the attached flow towards the trailing edge instead of flowing outwards towards the tip end. Therefore, the slat can also be perceived as a boundary layer control means.

According to a preferred embodiment, the first zone and/or the additional zone are arranged in the airfoil region in a part nearest the hub. That is, the zone is located just beyond the transition zone. This is efficient for interrupting an already extant cross-flow coming from the root area.

According to another preferred embodiment, the first zone and/or the second zone are arranged in the transition zone. Due to the special conditions relating to blades for wind turbines, the interfering cross-flows especially arise in this region of the blade. The zones with barrier generating means thus prevent the cross-flows from propagating towards the blade tip.

Typically, the first zone and the optional additional zones are positioned within the inner 50% of the blade, or the inner 35% of the blade, or even the inner 25% of the blade, i.e. within a radial distance of 50%, 35%, or 25% of the blade length from the hub. This is related to the fact that the airfoil part, which typically starts at the position of the maximum chord length, typically is located at a radial distance from the root of about 20% of the blade length.

In another embodiment according to the invention, the first zone and/or the second zone comprise a Gurney flap arranged at the trailing edge and on the pressure side of the blade. This may further improve the performance of the blade. Usually the Gurney flap is used in addition to the barrier generating means. However, in situations where the separation occurs near the trailing edge, the Gurney flap may be sufficient in itself.

The first and/or the additional zone may of course comprise a combination of any of the flow barrier generating means.

According to preferred embodiments, the first zone and the optional additional zones have a longitudinal extent, which lies in an interval between 20 cm and 2 m, or between 25 cm and 1.5 m, or between 30 cm and 1 m. Typically, the longitudinal extent of the zones is about 50 cm.

In one embodiment according to the invention, the blade comprises barrier generating means only in the first zone and optionally in the additional zones of additional cross-flows.

The invention is explained in detail below with reference to an embodiment shown in the drawings, in which
Fig. 1 shows a wind turbine,
Fig. 2 shows a wind turbine blade according to the invention,
Fig. 3 shows a schematic view of an airfoil profile,
Fig. 4 shows a blade section of a first embodiment with barrier generating means according to the invention,
Fig. 5 shows a profile of a second embodiment with barrier generating means according to the invention,
Fig. 6 shows a profile of a third embodiment with barrier generating means according to the invention,
Fig. 7 shows a profile of a fourth embodiment with barrier generating means according to the invention, and
Fig. 8 shows a profile of a fifth embodiment with barrier generating means according to the invention.

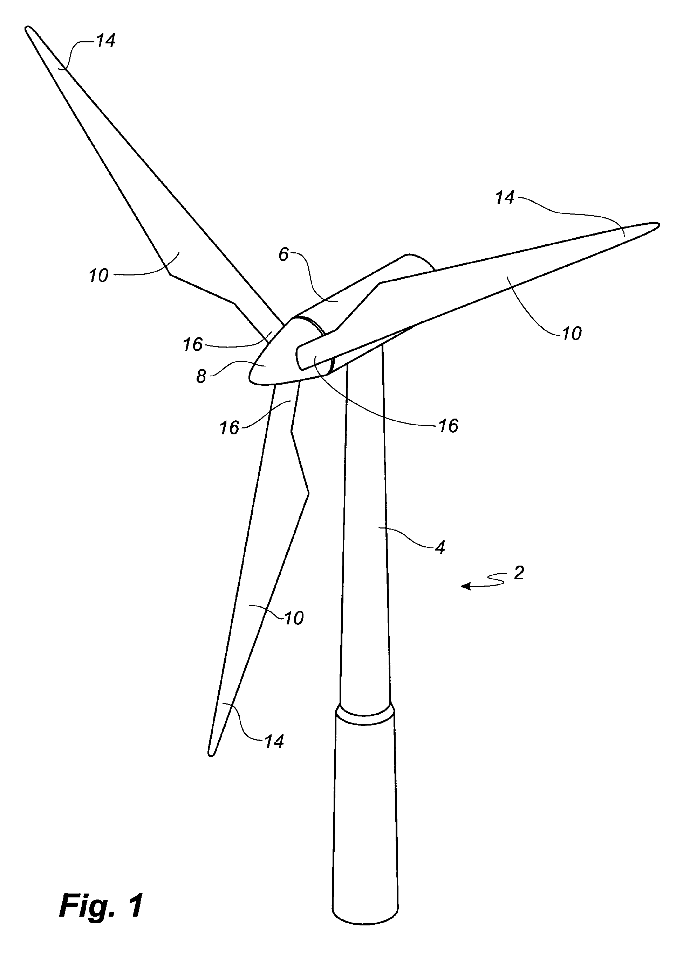

Fig. 1 illustrates a conventional modern wind turbine according to the so-called "Danish concept" with a tower 4, a nacelle 6, and a rotor with a substantially horizontal rotor shaft. The rotor includes a hub 8 and three blades 10 extending radially from the hub 8, each having a blade root 16 nearest the hub and a blade tip 14 furthest from the hub 8.

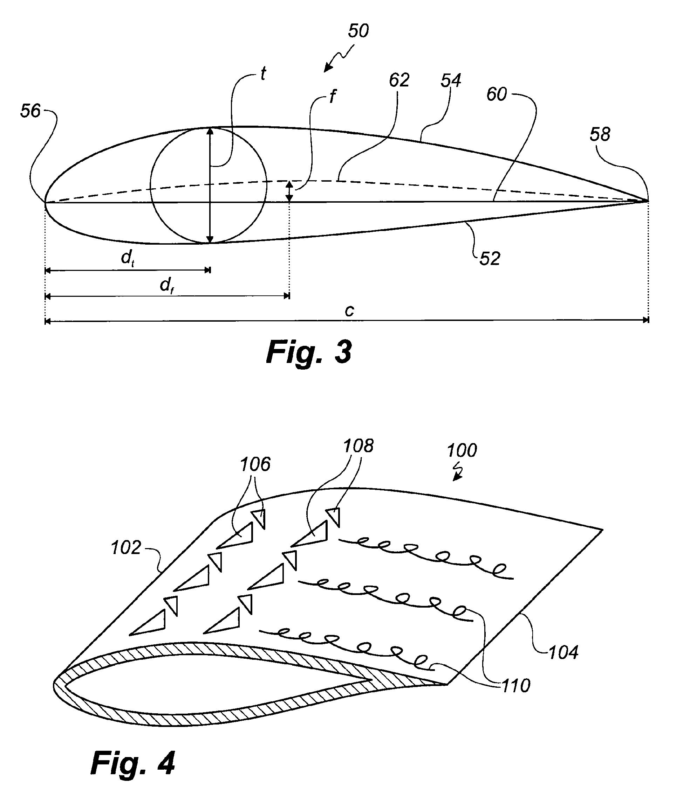

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward side and the leeward side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position d_{f} of the maximum camber f, the maximum airfoil thickness t, which is the largest diameter of the inscribed circles along the median camber line 62, the position dₜ of the maximum thickness t, and a nose radius (not shown). These parameters are typically defined as ratios to the chord length c.

Ideally, when the airfoil 50 is impacted by an incident airflow flowing from the leading edge 56 towards the trailing edge 68, a reduced pressure is generated at the suction side 54 relative to the pressure side 52 so that a pressure differential is created between the suction side 54 and the pressure side 52, thus generating a lift. However, in practice a detachment of the airflow can occur, which will cause an increase in drag and a reduction of lift. This detachment usually occurs at the suction side 54 between the position dₜ of maximum thickness and the trailing edge 58 of the airfoil 50.

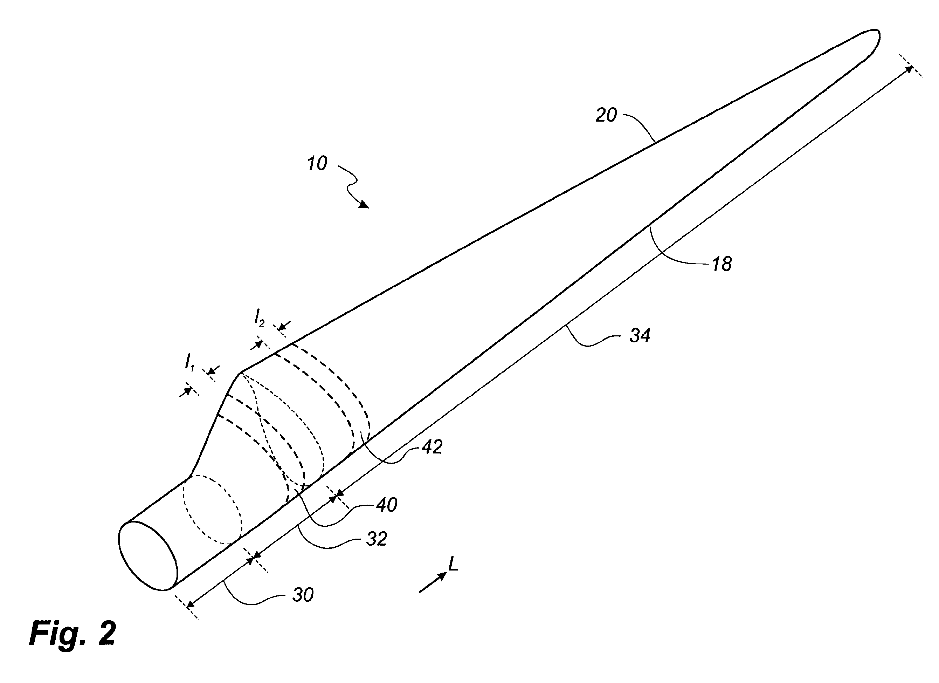

Fig. 2 shows a schematic view of an embodiment of a wind turbine according to the invention. The wind turbine blade 10 has the shape of a conventional wind turbine blade and comprises a root region 30 closest to the hub, a profiled or an airfoil region 34 furthest away from the hub, and a transition region 32 between the root region 30 and the region area 34. The blade 10 comprises a leading edge 18 facing the direction of rotation of the blade 10 when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 has a substantially circular or elliptical cross-section, which reduces loads from wind gusts and makes it easier and safer to mount the blade 10 to the hub. The diameter of the root region 30 is typically constant along the entire root area 30. The transition region 32 has a shape gradually changing from the circular or elliptical shape of the root region 30 to the airfoil profile of the airfoil region 34. The width of the transition region 32 typically increases substantially linearly with increasing distance L from the hub.

The airfoil region 34 has an airfoil profile with a chord extending between the leading edge 18 and the trailing edge 20 of the blade 10. The width of the chord decreases with increasing distance L from the hub. It should be noted that the chords of different sections of the blade do not necessarily lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Due to the non-ideal profile (with respect to generate lift) of the root region 30 and the transition region 32, flow detachment usually occurs in these regions. Due to rotational forces of the rotor, the airflow detachment may propagate towards the tip end 14 of the blade 10. Therefore, the blade 10 is provided with a number of barrier generating means adapted to generating a barrier of airflow extending in the chord direction and which prevents cross-flows of detached airflow to propagate beyond these barriers. The barrier generating means are preferably arranged so as to create a barrier of airflow extending at least from the position of maximum thickness to the trailing edge 18 of the blade 10.

The barrier generating means are arranged in a first zone 40 having a first longitudinal extend I₁ and/or in a second or additional zone 42 having a second longitudinal extent I₂. The longitudinal extents I₁, I₂ are approximately 0.5 to 1 meter. The barrier generating means arranged in the first zone 40 and the optional additional zone 42 may be of any of the embodiments shown in Figs. 4-8 or combinations thereof. Also, the barrier generating means in the two zones 40, 42 need not be of the same type.

Fig. 4 shows a blade section 100 (i.e. of the first zone or the second zone) of a first embodiment with barrier generating means according to the invention. The profile has a leading edge 102 and a trailing edge 104, and a first set of vortex generators 106 and a second set of vortex generators 108 are arranged on the suction side of the blade section 100. The vortex generators 106, 108 are here depicted as being of the vane type, but may be any other type of vortex generator. The vortex generators 106, 108 generate a barrier of airflow consisting of coherent turbulent structures, i.e. vortices propagating at the surface of the blade towards the trailing edge 104, which prevent cross-flows of detached airflow to propagate beyond the zone in which the vortex generators 106, 108 are arranged.

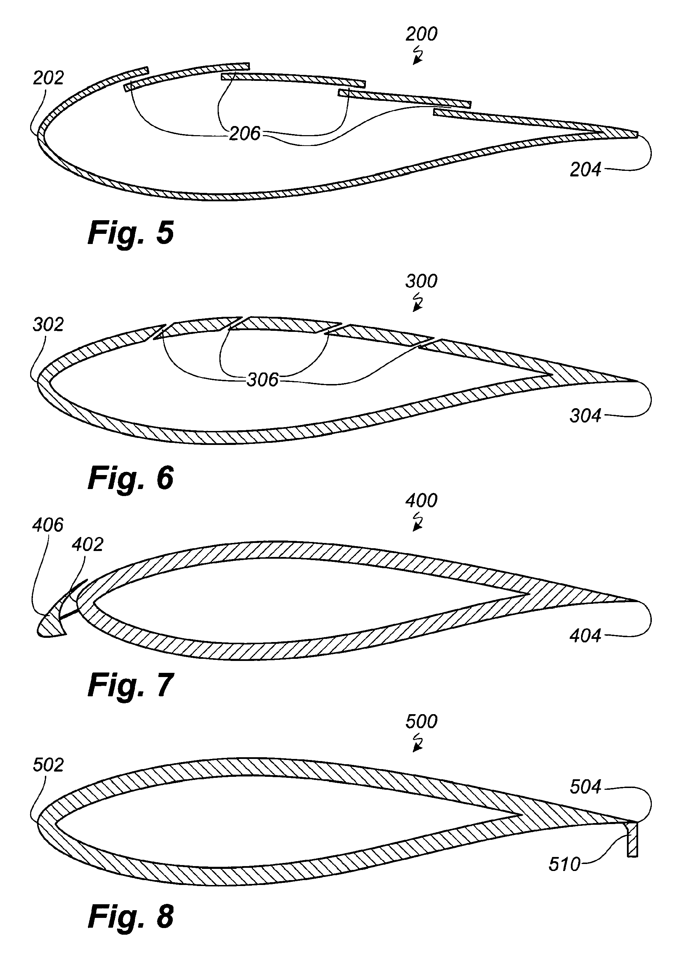

Fig. 5 shows a profile 200 of a second embodiment with barrier generating means according to the invention. In this embodiment, the barrier generating means consists of a number of ventilation holes 206 for blowing or suction between an interior of the blade and an exterior of the blade. The ventilation holes 206 can be utilised to create a belt of attached flow. The air vented from the ventilation holes 206 are used to energise and re-energise the boundary layer in order to maintain the flow attached to the exterior surface of the blade. The belt of attached flow acts as a barrier to a separated cross-flow by "catching" the cross-flow, which is thus forced to join the attached flow towards the trailing edge 204 instead of flowing outwards towards the tip end. The ventilation holes 206 are in this embodiment arranged substantially tangentially to the surface of the profile 200. The ventilation holes 206 may be provided as a series of holes in the longitudinal direction of the blade or as longitudinally extending slots.

Fig. 6 shows a profile 300 of a third embodiment with barrier generating means in form of ventilation holes 306. This embodiment corresponds to the second embodiment shown in Fig. 5, with the exception that the ventilation holes 306 are not arranged tangentially to the surface of the profile. The holes 306 are instead oriented in an angle compared to the surface, but still have a gradient pointing towards the trailing edge 304 of the profile 300, thereby ensuring that the vented air propagates substantially towards the trailing edge 304 of the profile instead of towards the blade tip of the blade.

Fig. 7 shows a profile 400 of a fourth embodiment with barrier generating means according to the invention. In this embodiment, the barrier generating means consists of a slat 406 arranged at the leading edge 402 of the profile 400. The slat points downwards towards the pressure side of the profile 402 and is utilised to create a local change in the inflow angle and airfoil lift, thereby causing the flow to remain attached to the surface of the blade. This attached "tunnel" for the flow creates a barrier, where the cross-flow is caught and thus forced to join the attached flow towards the trailing edge 404 instead of flowing outwards towards the tip end.

Fig. 8 shows a profile 500 of a fifth embodiment according to the invention. In this embodiment, the barrier profile 500 is additionally provided with a Gurney flap 510 arranged on the pressure side at the trailing edge 504 of the profile 500. This may further improve the performance of the blade.

The invention has been described with reference to a preferred embodiment. However, the scope of the invention is not limited to the illustrated embodiment, and alterations and modifications can be carried out without deviating from the scope of the invention.

### List of reference numerals

In the numerals, x refers to a particular embodiment. Thus, for instance, 402 refers to the leading edge of the fourth embodiment.
- 2: wind turbine
- 4: tower
- 6: nacelle
- 8: hub
- 10: blade
- 14: blade tip
- 16: blade root
- 18: leading edge
- 20: trailing edge
- 30: root region
- 32: transition region
- 34: airfoil region
- 40: first zone
- 42: second zone / additional zone
- 50: airfoil profile
- 52: pressure side
- 54: suction side
- 56: leading edge
- 58: trailing edge
- 60: chord
- 62: camber line / median line
- x00: blade profile
- x02: leading edge
- x04: trailing edge
- x06, 108: barrier generating means
- 510: Gurney flap

## Claims

1. A blade (10) for a rotor of a wind turbine (2) having a substantially horizontal rotor shaft, said rotor comprising a hub (8), from which the blade (10) extends substantially in a radial direction when mounted to the hub (8), the blade comprising:
- a profiled contour including a leading edge (18) and a trailing edge (20) as well as a pressure side and a suction side, the profiled contour when being impacted by an incident airflow generating a lift, wherein the profiled contour is divided into:
- a root region (30) with a substantially circular profile closest to the hub,
- an airfoil region (34) with a lift generating profile furthest away from the hub, and
- a transition region (32) between the root region (30) and the airfoil region (34), the profile of the transition region (32) gradually changing in the radial direction from the circular profile of the root region to the lift generating profile of the airfoil region, and wherein
- the suction side comprises at least a first zone (40, 42), which extends substantially in the direction of the incident airflow, and which is positioned in a zone of a cross-flow, **characterised in that**
- the first zone (40, 42) comprises a first barrier generating means (x06) adapted to generating a barrier of airflow, which extends essentially in the direction of the incident airflow, the barrier of airflow being of sufficient strength and length so as to effectively reduce the cross-flow.

2. A blade according to claim 1, wherein the barrier generating means (x06) is adapted to generate a barrier of airflow extending at least from an area of maximum relative profile thickness and the trailing edge (20) of the blade (10).

3. A blade according to claim 1 or 2, wherein the barrier generating means is adapted to generate a barrier of airflow extending substantially from the leading edge (18) to the trailing edge (20) of the blade (10).

4. A blade according to any of the preceding claims, wherein the blade comprises an additional zone (40, 42), which extends substantially in the direction of the incident airflow, and which is arranged in a zone of an additional cross-flow, the additional zone (40, 42) comprising a second barrier generating means (x06) adapted to generate a second barrier of airflow in the direction of the incident flow within the additional zone.

5. A blade according to any of the preceding claims, wherein the first barrier generating means (x06) and/or the second barrier generating means (x06) comprise a number of turbulence generating means, such as a number of vortex generators.

6. A blade according to claim 5, wherein the number of turbulence generating means are adapted to provide vortices with a height corresponding to the height of the cross-flow.

7. A blade according to any of the preceding claims, wherein the first barrier generating means (x06) and/or the second barrier generating means (x06) comprise a number of boundary layer control means.

8. A blade according to claim 7, wherein the boundary layer control means comprises a number of ventilation holes (206, 306) for blowing or suction between an interior of the blade and an exterior of the blade.

9. A blade according to claim 8, wherein the ventilation holes (206) are arranged substantially tangentially to the contour of the blade.

10. A blade according to any of the preceding claims, wherein the first barrier generating means and/or the second barrier generating means comprise a slat (406) arranged at the leading edge of the blade.

11. A blade according to any of the preceding claims, wherein the first zone (40, 42) and/or the additional zone (40, 42) are arranged in the airfoil region (34) in a part nearest the hub.

12. A blade according to any of the preceding claims, wherein the first zone (40, 42) and/or the second zone (40, 42) are arranged in the transition zone (32).

13. A blade according to any of the preceding claims, wherein the first zone (40, 42) and/or the second zone (40, 42) comprise a Gurney flap arranged at the trailing edge (20) and on the pressure side of the blade.

14. Wind turbine rotor comprising a number, preferably two or three, of wind turbine blades (10) according to claim 1-13.

15. Wind turbine (2) comprising a number of blades (8) according to claims 1-13 or a wind turbine rotor according to claim 14.
